# EUROPEAN PATENT SPECIFICATION

(11) **EP 3 603 462 B1**
(45) Date of publication and mention of the grant of the patent: **17.02.2021**
(21) Application number: 19189416.1
(22) Date of filing: 31.07.2019
(51) Int. Cl.: A47J 31/36, A47J 31/46

(54) **MACHINE FOR DISPENSING INFUSED BEVERAGES AND THE LIKE, PARTICULARLY OF THE TYPE WITH CAPSULES AND/OR PODS**
MASCHINE ZUR ABGABE VON AUFGUSSGETRÄNKEN UND DERGLEICHEN, INSBESONDERE VON DER ART MIT KAPSELN UND/ODER HÜLSEN
MACHINE DE DISTRIBUTION DE BOISSONS INFUSÉES ET SIMILAIRES, EN PARTICULIER DU TYPE À CAPSULES ET/OU À NACELLES

(30) Priority: 01.08.2018 IT 201800007714
(43) Date of publication of application: 05.02.2020
(73) Proprietor: Caffe' d'Italia S.r.l., 52029 Castiglion Fibocchi (AR) (IT)
(72) Inventor: BIANCHINI, Roberto, 52019 LATERINA PERGINE VALDARNO, Località Ponticino AR (IT)
(74) Representative: Modiano, Micaela Nadia

(56) References cited:
- EP-A1- 2 356 928
- EP-A2- 1 327 407
- WO-A1-2016/135212
- DE-U1-202007 002 910
- FR-A1- 2 873 011
- US-A1- 2006 144 243
- US-A1- 2018 078 086

## Description

The present invention relates to a machine for dispensing infused beverages and the like, particularly of the type with capsules and/or pods.

In the field of catering, and in particular in the field of beverages obtained by means of the infusion of flavored powders, machines for dispensing infused beverages of the known type, such as for example the ones dedicated to the production of espresso coffee, generally comprise an infusion assembly which has an infusion chamber in which a capsule or pod is placed which contains inside it the powder through which water passes in order to obtain the infusion.

In this manner, by changing the capsule or pod in each instance it is possible to obtain infused beverages with different flavors.

In greater detail, these infusion assemblies of the known type can be divided into two macro-categories: single-dose assemblies and multiple-dose, typically two-dose, assemblies.

For the former, single-dose capsules or pods are used which are capable therefore of dispensing a single portion of beverage at a time.

For the latter, instead, the use of larger capsules or pods, capable of dispensing two or more portions of beverage at a time, is provided. In this case, conveniently, the infusion assembly is provided with a number of dispensing spouts that matches the number of portions that one wishes to dispense.

These infusion assemblies of the known type are not free from drawbacks, which include the fact that both in the case of a single-dose type and in the case of a double- or triple-dose type, they are not capable of dispensing multiple beverages of different flavors at the same time.

In fact, in order to obviate this drawback it is known to provide dispensing machines with multiple mutually independent infusion assemblies, with an unavoidable multiplication of the components that constitute the machine and therefore of the production costs. The document FR-2 873 011 discloses a machine for dispensing beverages comprising two mutually separate infusion chambers.

The aim of the present invention is to provide a machine for dispensing infused beverages or the like that allows to dispense simultaneously one or more portions of the same beverage or, at the user's discretion, allows to dispense simultaneously multiple beverages of different flavors, using in both cases a single infusion assembly.

Within the scope of this aim, an object of the present invention is to provide a dispensing machine that is capable of dispensing in succession beverages of different flavors without residues between one dispensing operation and the other in order to keep the flavor of the desired beverage unchanged.

Another object of the present invention is to provide a dispensing machine that is capable of giving the greatest assurances of reliability, quality, repeatability and safety in use.

A further object of the invention is to provide a dispensing machine that is economically competitive with respect to commercially available dispensing machines.

This aim, these objects and others which will become better apparent hereinafter are achieved by a machine for dispensing infused beverages and the like in accordance with claim 1.

Further characteristics and advantages of the invention will become better apparent from the description of a preferred but not exclusive embodiment of a machine for dispensing infused beverages and the like, particularly of the type with capsules and/or pods, illustrated by way of nonlimiting example with the aid of the accompanying drawings, wherein:
Figure 1 is a perspective view of a machine for dispensing infused beverages and the like, according to the invention, with its infusion assembly in its closed state;
Figure 2 is a perspective view of the dispensing machine shown in Figure 2, with its infusion assembly in its open state;

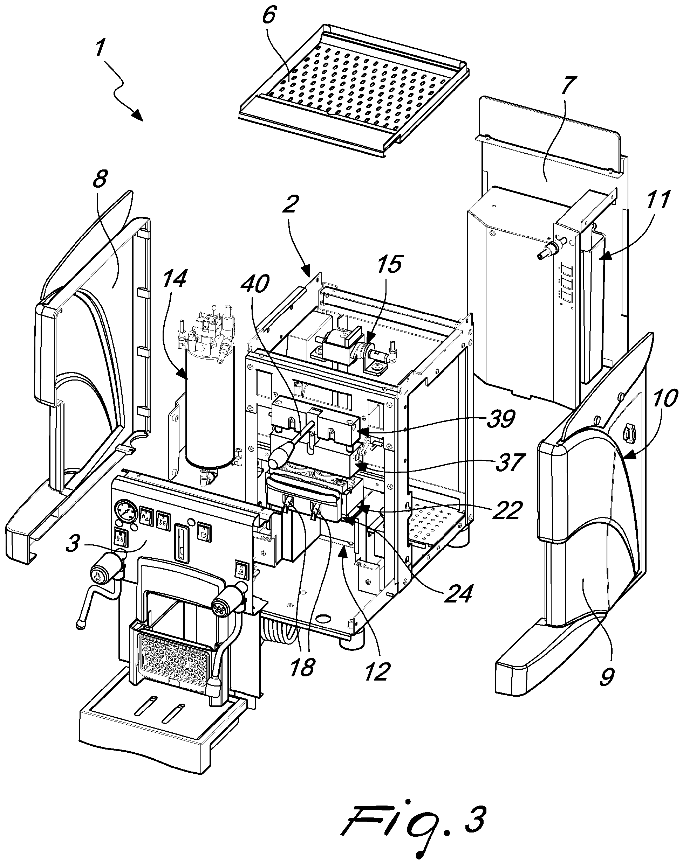

Figure 3 is an exploded perspective view of the dispensing machine shown in the preceding figures;

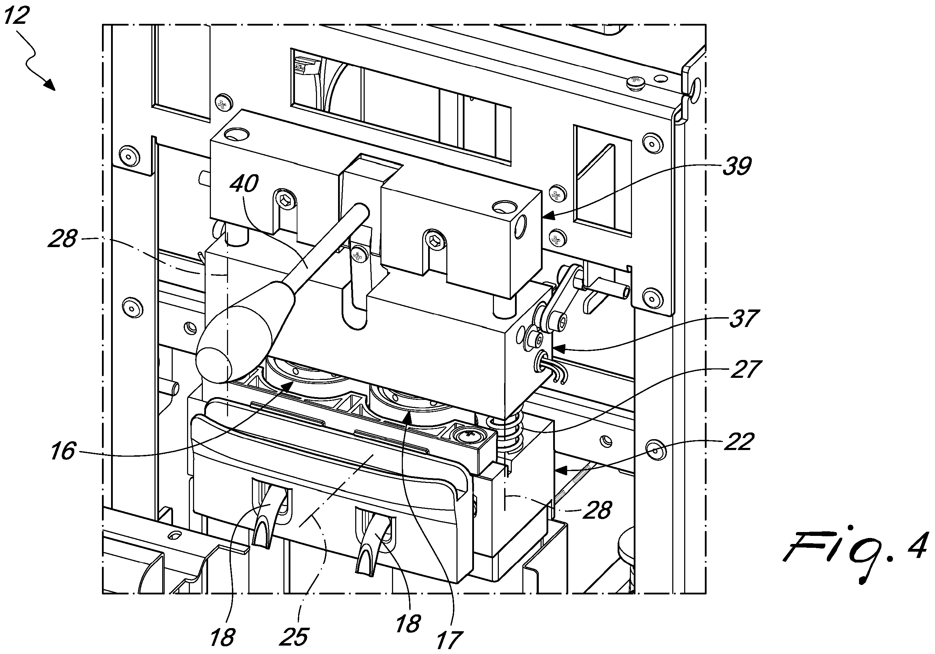

Figure 4 is an enlarged-scale detail view of the infusion assembly shown in Figure 3,
Figure 5 is an exploded perspective view of the infusion assembly shown in the preceding figures, containing two capsules;
Figure 6 is a top plan view of the infusion assembly shown in the preceding figures, containing two capsules;
Figure 7 is a sectional view of the infusion assembly shown in Figure 6, taken along the sectional plane VII-VII:
Figure 8 is a top plan view of the infusion assembly shown in the preceding figures, containing a single capsule;
Figure 9 is a sectional view of the infusion assembly shown in Figure 8, taken along the sectional plane IX-IX.

With reference to the figures, the machine for dispensing infused beverages and the like, particularly of the type with capsules and/or pods, designated generally by the reference numeral 1, comprises a supporting frame 2 enclosed within an external case constituted by a front panel 3, which is provided with the control elements 4 and forms the worktop 5 of the dispensing machine 1, an upper lid 6, which forms a resting surface for cups or others, a rear panel 7 and two side panels 8 and 9, one of which is provided with a door 10 adapted to allow access to the tank 11 of the dispensing machine 1 that is adapted to contain the water required to obtain an infusion or the like.

In greater detail, the following are provided inside the supporting frame 2 in addition to the tank 11:
- at least one infusion assembly 12, which is functionally connected to the tank 11 and is adapted to perform the infusion of capsules and/or pods 13 accommodated inside it,
- at least one boiler 14, which is functionally interposed between the tank 11 and the infusion assembly 12 to heat the water intended for said infusion assembly 12, and
- at least one electric pump 15, which is interposed between the infusion assembly 12 and the boiler 14 for the pumping of water from the boiler 14 to the infusion assembly 12.

According to the invention, the infusion assembly 12 comprises at least two infusion chambers 16 and 17, respectively a left one and a right one if viewed from the front, which are mutually separate and are each provided with a dispensing spout 18 and are adapted to accommodate at least two separate capsules and/or pods 13.

In greater detail, the two infusion chambers 16 and 17 are functionally connected to the electric pump 15 by means of at least one electric valve 19 with at least three ways.

Furthermore, means 20 are comprised for controlling the flow of the water that arrives from the electric valve 19 in the direction of at least one of the two infusion chambers 16 and 17, and means 21 are comprised for detecting the capsules and/or pods 13 accommodated in the two infusion chambers 16 and 17 for either the activation or the deactivation of the flow control means 20 mentioned earlier.

In the proposed embodiment, the infusion assembly 12 comprises a main body 22 which is integrally associated with the supporting frame 2 and at least one slider 23, which is provided with a lid 24 provided with a grip handle, which is slidingly associated with the main body 22 along a substantially horizontal direction 25 with respect to the spatial orientation of the dispensing machine 1 in its normal use.

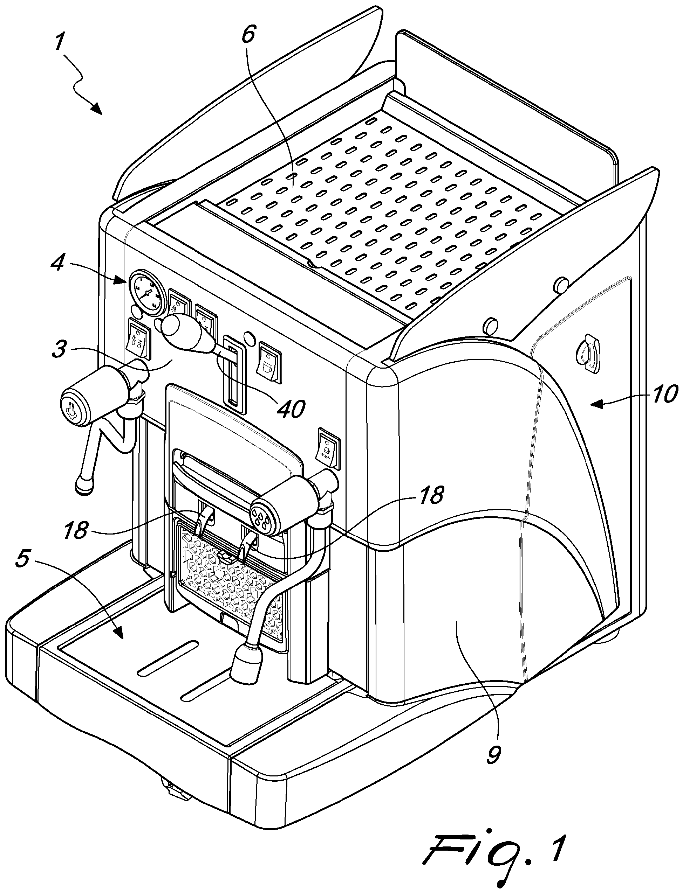

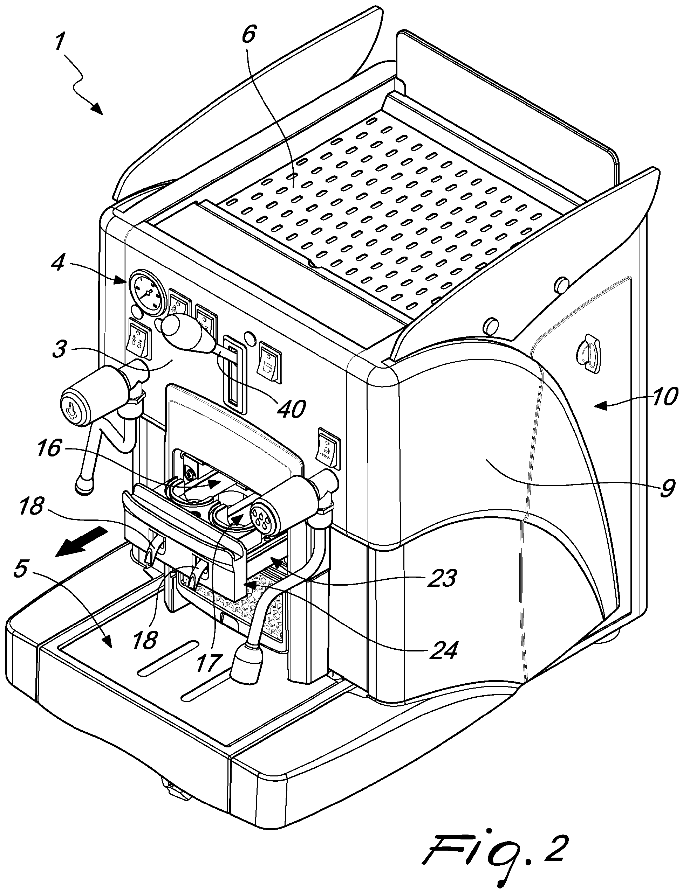

More specifically, the slider 23 can move, along the substantially horizontal direction 25, between a position that is partially internal to the main body 22 and corresponds to the closed state of the infusion assembly 12 shown in Figure 1, and a position that exits from the main body 22 and corresponds to the open state of the infusion assembly 12 shown in Figure 2, so as to protrude outside the general volume of the dispensing machine 1 and allow the placement of the capsules and/or pods 13 in the slider 23.

The main body 22 and the slider 23 are shaped so as to form, once they are mutually coupled in said partially internal position of the slider 23, the two infusion chambers 16 and 17.

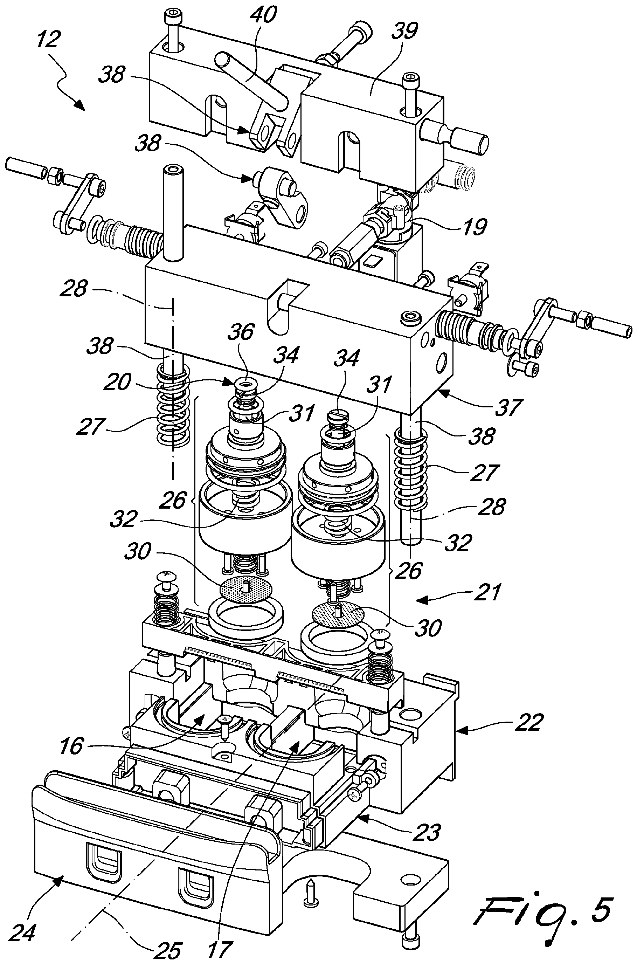

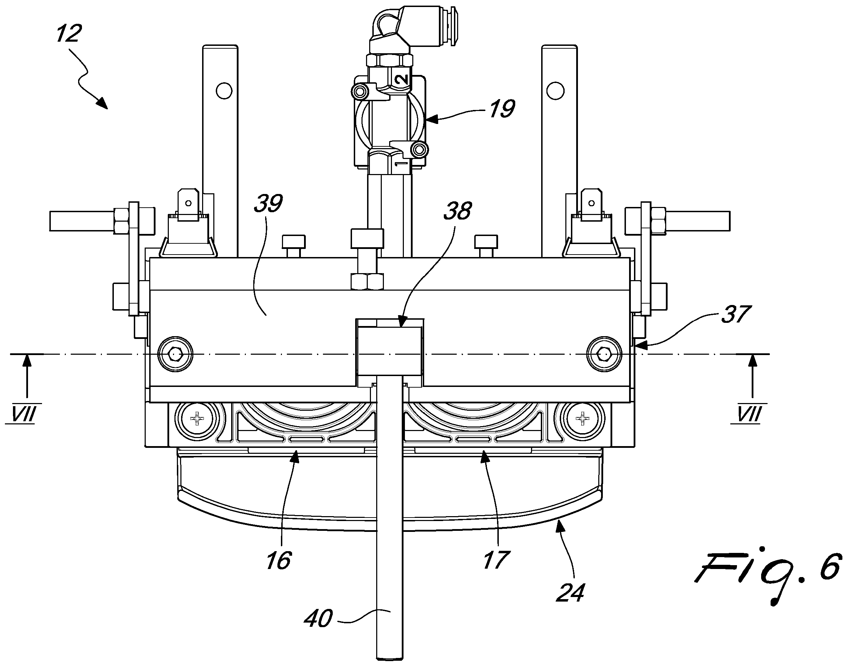

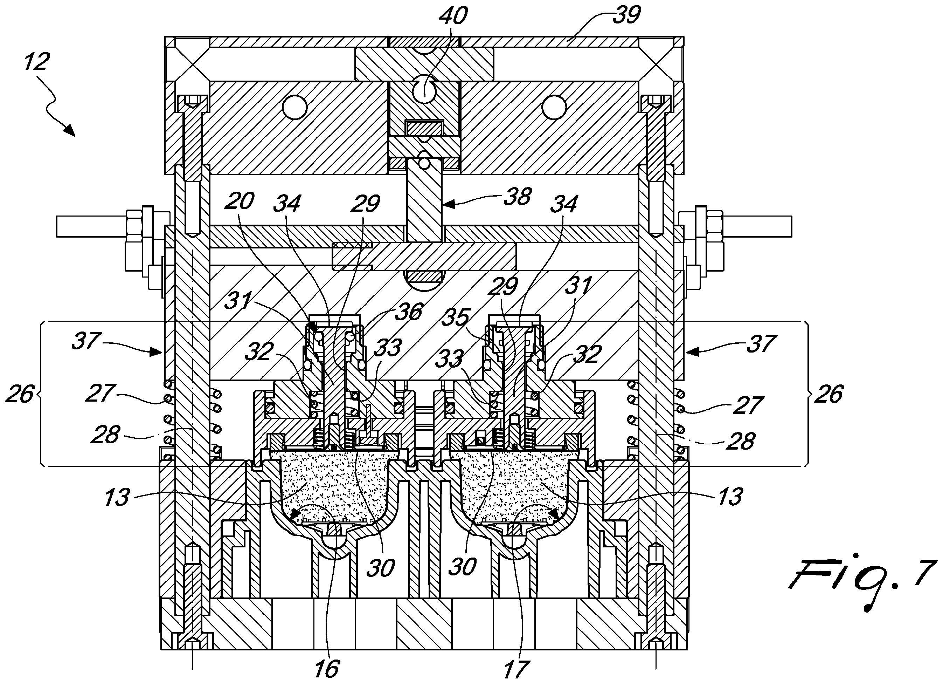

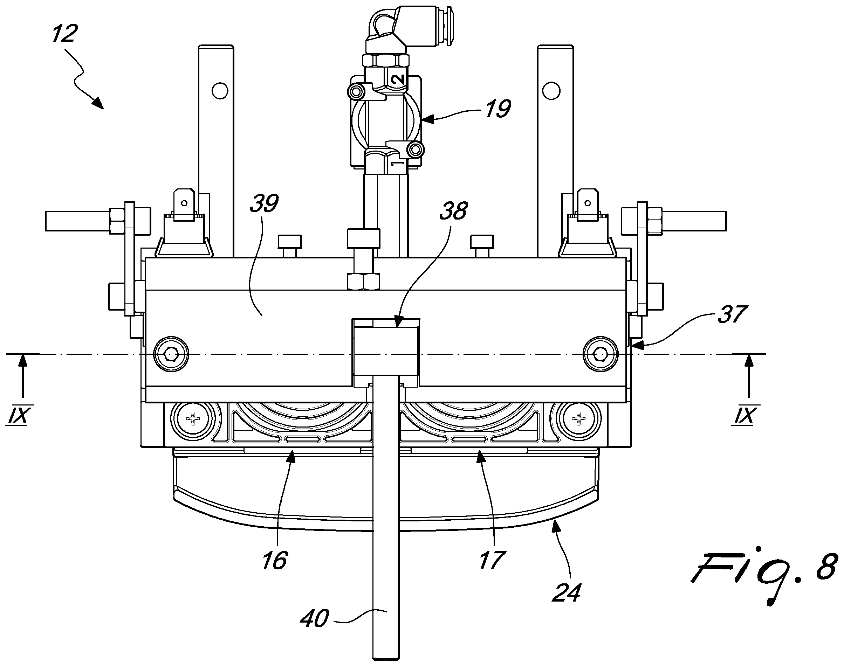

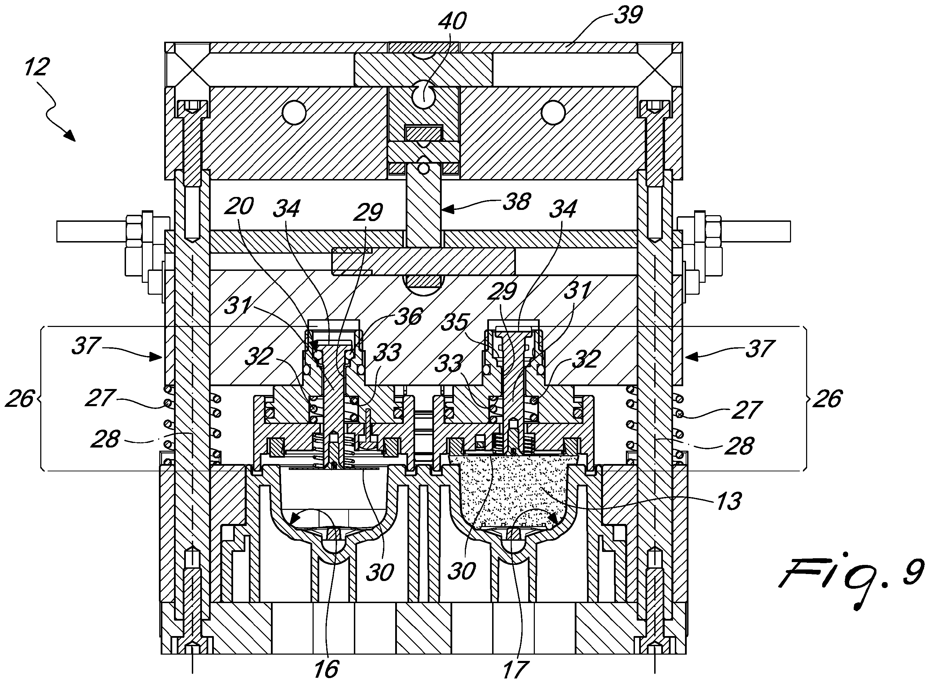

Furthermore, with particular reference to Figures 5 to 9, the infusion assembly 12 comprises, for each infusion chamber 16 and 17, a dispensing piston 26, which is arranged above the respective infusion chamber 16 and 17 with which it is associated and can move in contrast with first elastic means 27 along a direction 28 that is substantially normal to the plane of arrangement of the capsule and/or pod 13 accommodated in the respective infusion chamber 16 and 17, from an inactive position, in which each dispensing piston 26 is spaced from the respective infusion chamber 16 and 17 so as to allow the movement of the slider 23 along the substantially horizontal direction 25, to an active position, which each dispensing piston 26 abuts against the respective infusion chamber 16 and 17 so as to seal it hermetically, and vice versa due to the elastic return of the first elastic means 27.

In greater detail, the dispensing pistons 26 are shaped so that each one forms inside it a supply channel 29 which is adapted to connect the electric valve 19 to the two infusion chambers 16 and 17.

Furthermore, the previously mentioned detection means 21 comprise, for each one of the dispensing pistons 26, a plunger that is substantially T-shaped and is formed by a perforated plate 30, which can be arranged so as to face the respective infusion chamber 16 or 17, and a stem 31, which is accommodated slidingly with play inside and along the respective supply channel 29.

In greater detail, said supply channels 29 are formed inside the dispensing pistons 26 centrally thereto and in a manner that is parallel to the substantially normal direction 28 and the plungers can move in contrast with second elastic means 32 along the substantially normal direction 28 from a detection position, in which each plunger protrudes from the respective dispensing piston 26 in the direction of the respective infusion chamber 16 or 17, so that the respective perforated plate 30 is accommodated in the respective infusion chamber 16 or 17, to a detected position, in which each plunger is retracted into the respective dispensing piston 26 as a consequence of the contrast with the capsule and/or pod 13 accommodated in the respective infusion chamber 16 or 17 in the transition of the dispensing pistons 26 from the inactive position to the active position.

Vice versa, due to the elastic return of the second elastic means 32 in the transition of said dispensing pistons 26 from the active position to the inactive, position, the plungers pass from the detected position to the detection position.

More specifically, the second elastic means 32 are interposed between the perforated plates 30 and first contrast surfaces 33 formed by the dispensing pistons 26 on the opposite side with respect to the infusion chambers 16 and 17 relative to the perforated plates 30.

Furthermore, the stems 31 each comprise a radially widened portion 34, which is arranged on the opposite side with respect to the perforated plates 30 and is adapted to act as a stroke limiter of a mechanical type against second contrast surfaces 35 formed by the dispensing pistons 26 on the opposite side with respect to the first contrast surfaces 33 in the transition from the detected position to the detection position.

As regards the flow control means 20, they consist of hydraulic sealing elements which are associated with at least one of the dispensing pistons 26 and are arranged inside the respective supply channel 29 so as to affect the flow of the water that arrives from the electric valve 19 toward the respective infusion chamber 16 or 17 when the dispensing pistons 26 are arranged in their active position in the absence of the capsule and/or pod 13.

Advantageously, in the proposed embodiment, said flow control means 20 are provided only at a single infusion chamber 16 in order to allow the water to flow into the other infusion chamber 17 even in the absence of the capsules or pods 13 and thus allow the washing of the infusion chamber 17.

In greater detail, the flow control means 20 comprise an annular gasket 36 that is fitted on at least one of the stems 31 at the radially widened portion 34 so as to be interposed between it and the respective second contrast surface 35.

Finally, the infusion assembly 12 comprises at least one heat exchanger 37 which is associated directly with the electric valve 19 and forms inside it the channels for the passage of the water intended for the two infusion chambers 16 and 17, which supports the dispensing pistons 26 and is slidingly associated with the main body 22 by means of two guided posts 38 which are oriented so as to be parallel to the substantially normal direction 28 so that the dispensing pistons 26 are arranged above the main body 22.

Conveniently, the first elastic means 27 are formed along the guided posts 38 in a manner which is interposed between the heat exchanger 37 and the main body 22.

In the proposed embodiment, the movement of the heat exchanger 37 is provided by means of a crank system 38 which is interposed between the heat exchanger 37 and a fixed part 39 of the supporting frame 2, the movement of which is provided by means of a manually actuated control lever 40.

The operation of the dispensing machine 1 that has just been described is clear and evident from what has been described previously.

In particular, it is appropriate to note that if the dispensing of two identical or mutually different beverage portions is required, it is sufficient to:
- grip the grip handle of the lid 24 so as to make the slider 23 slide along the substantially horizontal direction 25 from its partially internal position to its protruding position;
- insert the capsules or pods 13 of the chosen flavor in the respective infusion chambers 16 and 17;
- make the slider 23 retract from its protruding position to its partially internal position;
- activate the actuation lever 40 so as to move the heat exchanger 37 and accordingly the dispensing pistons 26 from their inactive position to their active position;
- operate the dispensing machine 1 and wait for the dispensing of the beverages.

Once dispensing has been achieved, it is sufficient to lift the actuation lever 40 again and reopen the slider 23 to evacuate the used capsules or pods 13.

If instead it is necessary to dispense a single beverage, it is sufficient to repeat the steps that have just been described by inserting a single capsule or pod 13 in the infusion chamber without the flow control means 20, i.e., in the infusion chamber 17 with reference to the accompanying drawings.

Furthermore, if the need arises, between one dispensing and the next, to wash the infusion chamber 17 so as to have no residues of the previously dispensed beverage in the beverage to be dispensed, it is sufficient to operate the dispensing machine 1 without the presence of any capsule or pod 13 in the infusion chamber 17 and said chamber will be invaded by clean water to be then discharged through the corresponding dispensing spout 18.

In practice it has been found that the machine for dispensing infused beverages and the like, particularly of the type with capsules and/or pods, according to the present invention, achieves the intended aim and objects, since it allows to dispense at will one or two beverages even of different flavor, without duplicating the main components of the machine but only by providing a multiple infusion assembly.

Another advantage of the dispensing machine according to the present invention resides in that it is possible to perform washing operations when needed on at least one infusion chamber.

The machine for dispensing infused beverages and the like, particularly of the type of with capsules and/or pods, thus conceived is susceptible of numerous modifications and variations, all of which are within the scope of the inventive concept according to the attached claims.

For example, possible variations of the dispensing machine according to the invention might provide an infusion assembly with more than two infusion chambers, such as to allow the dispensing of more than two beverages simultaneously without having to duplicate the components of the machine, or the application of multiple infusion assemblies on a multiple dispensing machine might be provided so as to be able to dispense more than two beverages simultaneously without abandoning the inventive concept of the present invention.

All the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for dispensing infused beverages and the like, particularly of the type with capsules and/or pods, comprising a supporting frame (2) which accommodates inside it:
- at least one tank (11) adapted to contain the water required to obtain an infusion or the like,
- at least one infusion assembly (12), which is functionally connected to said at least one tank (11) and is adapted to perform the infusion of capsules and/or pods (13) accommodated inside it,
- at least one boiler (14), which is functionally interposed between said at least one tank (11) and said at least one infusion assembly (12) to heat the water intended for said at least one infusion assembly (12) and
- at least one electric pump (15), which is interposed between said at least one infusion assembly (12) and said at least one boiler (14) for the pumping of water from said at least one boiler (14) to said at least one infusion assembly (12),
said at least one infusion assembly (12) comprising at least two mutually separate infusion chambers (16, 17), each provided with a dispensing spout (18) and adapted to accommodate at least two separate capsules and/or pods (13), said at least two infusion chambers (16, 17) being functionally connected to said at least one electric pump (15) by means of at least one electric valve (19) with at least three ways, means (20) being further comprised for controlling the flow of the water that arrives from said at least one electric valve (19) in the direction of at least one of said at least two infusion chambers (16, 17) and means (21) being comprised for detecting said capsules and/or pods (13) accommodated in said at least two infusion chambers (16, 17) for either the activation or the deactivation of said flow control means (20), said at least one infusion assembly (12) comprising a main body (22) which is associated integrally with said supporting frame (2) and at least one slider (23) which is associated slidingly with said main body (22) along a direction (25) which is substantially horizontal with respect to the spatial orientation of said dispensing machine (1) in its normal use, said at least one slider (23) being movable, along said substantially horizontal direction (25), between a position that is partially internal to said main body (22) and a position that exits from said main body (22), such as to protrude outside the general volume of said dispensing machine (1) and allow the placement of said capsules and/or pods (13) in said at least one slider (23), said main body (22) and said at least one slider (23) being shaped so as to define, once they have been mutually coupled in said partially internal position of said at least one slider (23), said at least two infusion chambers (16, 17), said infusion assembly (12) comprising, for each one of said at least two infusion chambers (16, 17), a dispensing piston (26) which is arranged above the respective one of said at least two infusion chambers (16, 17) with which it is associated and movable in contrast with first elastic means (27) along a direction that is substantially normal (28) to the plane of arrangement of said capsule and/or pod (13) accommodated in said respective infusion chamber (16, 17) from an inactive position, in which said dispensing piston (26) is spaced from said respective infusion chamber (16, 17) in such a manner as to allow the movement of said at least one slider (23), to an active position, in which said dispensing piston (26) abuts against said respective infusion chamber (16, 17) so as to seal it hermetically, and vice versa due to the elastic return of said first elastic means (27), said dispensing pistons (26) being shaped so that each one forms inside it a supply channel (29) which is adapted to connect said at least one electric valve (19) to said at least two infusion chambers (16, 17), said detection means (21) comprising, for each one of said dispensing pistons (26), a plunger that is substantially T-shaped and is formed by a perforated plate (30), which can be arranged so as to face the respective one of said at least two infusion chambers (16, 17), and a stem (31), which is accommodated slidingly with play internally and along the respective one of said supply channels (29), said supply channels (29) being formed inside said dispensing pistons (26) centrally to them and in a manner that is parallel to said substantially normal direction (28) and said plungers being movable in contrast with second elastic means (32) along said substantially normal direction (28) from a detection position, in which each one of said plungers protrudes from the respective one of said dispensing pistons (26) in the direction of the respective one of said at least two infusion chambers (16, 17) so that the respective one of said perforated plates (30) is accommodated in said respective infusion chamber (16, 17), to a detected position, in which each one of said plungers is retracted into the respective one of said dispensing pistons (26) as a consequence of the contrast with said capsule and/or pod (13) accommodated in said respective infusion chamber (16, 17) in the transition of said dispensing pistons (26) from said inactive position to said active position, and vice versa due to the elastic return of said second elastic means (32) in the transition of said dispensing pistons (26) from said active position to said inactive position, said second elastic means (32) being interposed between said perforated plates (30) and first contrast surfaces (33) which are formed by said dispensing pistons (26) on the opposite side with respect to said at least two infusion chambers (16, 17) relative to said perforated plates (30), said stems (31) furthermore each comprising a radially widened portion (34) which is arranged on the opposite side with respect to said perforated plates (30) and is adapted to act as a stroke limiter of the mechanical type against second contrast surfaces (35) formed by said dispensing pistons (26) on the opposite side with respect to said first contrast surfaces (33) in the transition from said detected position to said detection position.

2. The dispensing machine (1) according to claim 1, **characterized in that** said flow control means (20) consist of hydraulic sealing elements which are associated with at least one of said dispensing pistons (26) and are arranged inside the respective one of said supply channels (29) so as to affect the flow of water that arrives from said at least one electric valve (19) toward the respective one of said at least two infusion chambers (16, 17) when said dispensing pistons (26) are arranged in said active position in the absence of said capsule and/or pod (13).

3. The dispensing machine (1) according to claim 2, **characterized in that** said flow control means (20) are provided at only one of said at least two infusion chambers (16), in order to allow the water to flow into the other one of said at least two infusion chambers (17) even in the absence of said capsules or pods (13).

4. The dispensing machine (1) according to claim 2 or 3, **characterized in that** said flow control means (20) comprise an annular gasket (36) which is fitted on at least one of said stems (31) at said radially widened portion (34) so as to be interposed between said radially widened portion (34) and the respective one of said second contrast surfaces (35).

5. The dispensing machine (1) according to one or more of the preceding claims, **characterized in that** said at least one infusion assembly (12) comprises at least one heat exchanger (37) which is associated directly with said at least one electric valve (19), which forms inside it the channels for the passage of the water intended for said at least two infusion chambers (16, 17), which supports said dispensing pistons (26) and is slidingly associated with said main body (22) by means of two guided posts (38) which are oriented parallel to said substantially normal direction (28) so that said dispensing pistons (26) are arranged above said main body (22), along said guided posts (38) there being said first elastic means (27), in a manner which is interposed between said at least one heat exchanger (37) and said main body (22).

6. The dispensing machine (1) according to claim 5, **characterized in that** the movement of said at least one heat exchanger (37) is provided by means of a crank system (38) which is interposed between said heat exchanger (37) and a fixed part (39) of said supporting frame (2).

7. The dispensing machine (1) according to claim 6, **characterized in that** the movement of said crank system (38) is provided by means of a manually operated actuation lever (40).

## Patentansprüche

1. Eine Maschine (1) zur Abgabe von Aufgussgetränken und dergleichen, insbesondere von der Art mit Kapseln und/oder Hülsen, die einen tragenden Rahmen (2) umfasst, welcher Folgendes enthält:
- mindestens einen Tank (11), ausgebildet, um das Wasser aufzunehmen, das benötigt wird, um einen Aufguss oder dergleichen zu erhalten;
- mindestens einen Aufgussaufbau (12), der funktionell mit dem mindestens einen Tank (11) verbunden und ausgebildet ist, um den Aufguss von Kapseln und/oder Hülsen (13) durchzuführen, die in ihm enthalten sind;
- mindestens einen Boiler (14), der funktionell zwischen dem mindestens einen Tank (11) und dem mindestens einen Aufgussaufbau (12) angeordnet ist, um das Wasser zu erhitzen, das für den mindestens einen Aufgussaufbau (12) bestimmt ist, und
- mindestens eine elektrische Pumpe (15), die zwischen dem mindestens einen Aufgussaufbau (12) und dem mindestens einen Boiler (14) angeordnet ist, zum Pumpen von Wasser aus dem mindestens einen Boiler (14) zu dem mindestens einen Aufgussaufbau (12),
wobei der mindestens eine Aufgussaufbau (12) mindestens zwei voneinander getrennte Aufgusskammern (16, 17) umfasst, die jeweils mit einer Abgabedüse (18) ausgestattet und ausgebildet sind, um mindestens zwei separate Kapseln und/oder Hülsen (13) aufzunehmen, wobei die mindestens zwei Aufgusskammern (16, 17) funktionell über mindestens ein elektrisches Ventil (19) mit mindestens drei Wegen mit der mindestens einen elektrischen Pumpe (15) verbunden sind, wobei weiter Mittel (20) umfasst sind, um den Strom des Wassers, das von dem mindestens einen elektrischen Ventil (19) kommt, in Richtung mindestens einer der mindestens zwei Aufgusskammern (16, 17) zu steuern, und wobei Mittel (21) umfasst sind, um die Kapseln und/oder Hülsen (13) zu erkennen, die in die mindestens zwei Aufgusskammern (16, 17) aufgenommen sind, zur Aktivierung oder Deaktivierung der Durchflussregelungsmittel (20), wobei der mindestens eine Aufgussaufbau (12) einen Hauptkörper (22) umfasst, welcher integral mit dem tragenden Rahmen (2) verbunden ist, und mindestens einen Schieber (23), der verschiebbar mit dem Hauptkörper (22) entlang einer Richtung (25) verbunden ist, die im Wesentlichen horizontal zur räumlichen Ausrichtung der Abgabemaschine (1) in ihrem normalen Gebrauch ist, wobei der mindestens eine Schieber (23) in der im Wesentlichen horizontalen Richtung (25) zwischen einer Position, die teilweise innerhalb des Hauptkörpers (22) liegt, und einer Position beweglich ist, die aus dem Hauptkörper (22) heraustritt, um aus dem allgemeinen Volumen der Abgabemaschine (1) herauszuragen und die Positionierung der Kapseln und/oder Hülsen (13) in den mindestens einen Schieber (23) zu ermöglichen, wobei der Hauptkörper (22) und der mindestens eine Schieber (23) geformt sind, um, sobald sie miteinander in der teilweise internen Position des mindestens einen Schiebers (23) gekoppelt wurden, die mindestens zwei Aufgusskammern (16, 17) zu bestimmen, wobei der Aufgussaufbau (12) für jede der mindestens zwei Aufgusskammern (16, 17) einen Abgabekolben (26) umfasst, der oberhalb der jeweiligen der mindestens zwei Aufgusskammern (16, 17) angeordnet ist, mit der er verbunden ist, und beweglich im Kontrast zu ersten elastischen Mitteln (27) in einer Richtung, die im Wesentlichen normal (28) zur Anordnungsebene der Kapsel und/oder Hülse (13) ist, die in der entsprechenden Aufgusskammer (16, 17) angeordnet ist, aus einer inaktiven Position, in welcher der Abgabekolben (26) von der jeweiligen Aufgusskammer (16, 17) beabstandet ist, um die Bewegung des mindestens einen Schiebers (23) zu ermöglichen, in eine aktive Position, in welcher der Abgabekolben (26) an die jeweilige Aufgusskammer (16, 17) anstößt, um sie hermetisch abzudichten, und umgekehrt, aufgrund der elastischen Rückstellung der ersten elastischen Mittel (27), wobei die Abgabekolben (26) so geformt sind, dass jeder in seinem Inneren einen Zuführkanal (29) bildet, der ausgebildet ist, um das mindestens eine elektrische Ventil (19) mit den mindestens zwei Aufgusskammern (16, 17) zu verbinden, wobei die Erkennungsmittel (21) für jeden der Abgabekolben (26) einen Plunger umfassen, der im Wesentlichen T-förmig ist und von einer perforierten Platte (30) gebildet wird, die so angeordnet werden kann, dass sie der jeweiligen der mindestens zwei Aufgusskammern (16, 17) zugewandt ist, und einen Schaft (31), der verschiebbar mit Spiel innerhalb und entlang des jeweiligen der Zuführkanäle (29) aufgenommen ist, wobei die Zuführkanäle (29) zentral innerhalb der Abgabekolben (26) und auf eine Art geformt sind, die parallel zu der im Wesentlichen normalen Richtung (28) ist, und wobei die Plunger in der im Wesentlichen normalen Richtung (28) im Kontrast zu zweiten elastischen Mitteln (32) beweglich sind aus einer Erkennungsposition, in welcher jeder der Plunger aus dem jeweiligen der Abgabekolben (26) in Richtung der entsprechenden der mindestens zwei Aufgusskammern (16, 17) herausragt, so dass die jeweilige der perforierten Platten (30) in die jeweilige Aufgusskammer (16, 17) aufgenommen ist, in eine erkannte Position, in welcher jeder der Plunger in den jeweiligen Abgabekolben (26) infolge des Kontrasts zu der Kapsel und/oder Hülse (13) zurückgezogen ist, die in die jeweilige Aufgusskammer (16, 17) aufgenommen ist, beim Übergang der Abgabekolben (26) aus der inaktiven Position in die aktive Position und umgekehrt aufgrund der elastischen Rückstellung der zweiten elastischen Mittel (32) beim Übergang der Abgabekolben (26) aus der aktiven Position in die inaktive Position, wobei die zweiten elastischen Mittel (32) zwischen den perforierten Platten (30) und ersten Kontrastoberflächen (33) angeordnet sind, die von den Abgabekolben (26) auf der Seite gebildet sind, die den mindestens zwei Aufgusskammern (16, 17) relativ zu den perforierten Platten (30) gegenüberliegt, wobei die Schäfte (31) weiter jeweils einen radial erweiterten Abschnitt (34) umfassen, der auf der gegenüberliegenden Seite mit Bezug auf die perforierten Platten (30) angeordnet und ausgebildet ist, um als Hubbegrenzer des mechanischen Typs gegen zweite Kontrastoberflächen (35) zu wirken, die von den Abgabekolben (26) auf der gegenüberliegenden Seite mit Bezug auf die ersten Kontrastoberflächen (33) gebildet sind, beim Übergang aus der erkannten Position in die Erkennungsposition.

2. Die Abgabemaschine (1) gemäß Anspruch 1, **dadurch gekennzeichnet, dass** die Durchflussregelungsmittel (20) aus hydraulischen Abdichtungselementen bestehen, die mit mindestens einem der Abgabekolben (26) verbunden und innerhalb des jeweiligen der Zuführkanäle (29) angeordnet sind, um den Strom von Wasser zu beeinflussen, der von dem mindestens einen elektrischen Ventil (19) zu der entsprechenden der mindestens zwei Aufgusskammern (16, 17) strömt, wenn die Abgabekolben (26) in Abwesenheit der Kapsel und/oder Hülse (13) in der aktiven Position angeordnet sind.

3. Die Abgabemaschine (1) gemäß Anspruch 2, **dadurch gekennzeichnet, dass** die Durchflussregelungsmittel (20) nur an einer der mindestens zwei Aufgusskammern (16) angebracht sind, um zu ermöglichen, dass das Wasser selbst in Abwesenheit der Kapseln oder Hülsen (13) in die andere der mindestens zwei Aufgusskammern (17) strömt.

4. Die Abgabemaschine (1) gemäß Anspruch 2 oder 3, **dadurch gekennzeichnet, dass** die Durchflussregelungsmittel (20) einen Dichtring (36) umfassen, der auf mindestens einen der Schäfte (31) an dem radial erweiterten Abschnitt (34) aufgesetzt ist, um zwischen dem radial erweiterten Abschnitt (34) und der entsprechenden der zweiten Kontrastoberflächen (35) angeordnet zu sein.

5. Die Abgabemaschine (1) gemäß einem oder mehreren der obigen Ansprüche, **dadurch gekennzeichnet, dass** der mindestens eine Aufgussaufbau (12) mindestens einen Wärmetauscher (37) umfasst, der direkt mit dem mindestens einen elektrischen Ventil (19) verbunden ist und in dem die Kanäle für den Durchfluss des Wassers gebildet sind, das für die mindestens zwei Aufgusskammern (16, 17) bestimmt ist, der die Abgabekolben (26) trägt und verschiebbar mit dem Hauptkörper (22) über zwei geführte Stützen (38) verbunden ist, die parallel zu der im Wesentlichen normalen Richtung (28) ausgerichtet sind, so dass die Abgabekolben (26) oberhalb des Hauptkörpers (22) angeordnet sind, wobei sich entlang den geführten Stützen (38) die ersten elastischen Mittel (27) befinden, auf eine Art, die zwischen dem mindestens einen Wärmetauscher (37) und dem Hauptkörper (22) angeordnet ist.

6. Die Abgabemaschine (1) gemäß Anspruch 5, **dadurch gekennzeichnet, dass** die Bewegung des mindestens eines Wärmetauschers (37) mittels eines Kurbelsystems (38) durchgeführt wird, welches zwischen dem Wärmetauscher (37) und einem festen Teil (39) des tragenden Rahmens (2) angeordnet ist.

7. Die Abgabemaschine (1) gemäß Anspruch 6, **dadurch gekennzeichnet, dass** die Bewegung des Kurbelsystems (38) mit Hilfe eines manuell betätigten Betätigungshebels (40) durchgeführt wird.

## Revendications

1. Machine (1) de distribution de boissons infusées et analogues, en particulier du type avec des capsules et/ou des dosettes, comportant un châssis de support (2) qui reçoit à l'intérieur de lui :
- au moins un réservoir (11) adapté pour contenir l'eau requise pour obtenir une infusion ou analogue,
- au moins un ensemble d'infusion (12), qui est fonctionnellement relié audit au moins un réservoir (11) et est adapté pour réaliser l'infusion de capsules et/ou de dosettes (13) reçues à l'intérieur de lui,
- au moins un bouilleur (14), qui est fonctionnellement intercalé entre ledit au moins un réservoir (11) et ledit au moins un ensemble d'infusion (12) pour chauffer l'eau destinée audit au moins un ensemble d'infusion (12) et
- au moins une pompe électrique (15), qui est intercalée entre ledit au moins un ensemble d'infusion (12) et ledit au moins un bouilleur (14) pour le pompage de l'eau à partir dudit au moins un bouilleur (14) jusqu'audit au moins un ensemble d'infusion (12),
ledit au moins un ensemble d'infusion (12) comportant au moins deux chambres d'infusion mutuellement séparées (16, 17), pourvues chacune d'un bec de distribution (18) et adaptées pour recevoir au moins deux capsules et/ou dosettes (13) séparées, lesdites au moins deux chambres d'infusion (16, 17) étant fonctionnellement reliées à ladite au moins une pompe électrique (15) au moyen d'au moins une vanne électrique (19) avec au moins trois voies, des moyens (20) étant en outre compris pour commander l'écoulement de l'eau qui arrive de ladite au moins une vanne électrique (19) dans la direction d'au moins une desdites au moins deux chambres d'infusion (16, 17) et des moyens (21) étant compris pour détecter lesdites capsules et/ou dosettes (13) reçues dans lesdites au moins deux chambres d'infusion (16, 17) pour l'activation ou la désactivation desdits moyens de commande d'écoulement (20), ledit au moins un ensemble d'infusion (12) comportant un corps principal (22) qui est associé d'un seul tenant audit châssis de support (2) et au moins un tiroir (23) qui est associé de manière coulissante audit corps principal (22) le long d'une direction (25) qui est sensiblement horizontale par rapport à l'orientation spatiale de ladite machine de distribution (1) dans son utilisation normale, ledit au moins un tiroir (23) étant mobile, le long de ladite direction sensiblement horizontale (25), entre une position qui est partiellement interne audit corps principal (22) et une position qui sort dudit corps principal (22), de manière à faire saillie à l'extérieur du volume général de ladite machine de distribution (1) et permettre le placement desdites capsules et/ou dosettes (13) dans ledit au moins un tiroir (23), ledit corps principal (22) et ledit au moins un tiroir (23) étant formés de manière à définir, une fois qu'ils ont été mutuellement couplés dans la position partiellement interne dudit au moins un tiroir (23), lesdites au moins deux chambres d'infusion (16, 17), ledit ensemble d'infusion (12) comportant, pour chacune desdites au moins deux chambres d'infusion (16, 17), un piston de distribution (26) qui est agencé au-dessus de la chambre respective parmi lesdites au moins deux chambres d'infusion (16, 17) à laquelle il est associé et mobile en opposition à des premiers moyens élastiques (27) le long d'une direction qui est sensiblement normale (28) au plan d'agencement de ladite capsule et/ou dosette (13) reçue dans ladite chambre d'infusion (16, 17) respective depuis une position inactive, dans laquelle ledit piston de distribution (26) est espacé de ladite chambre d'infusion (16, 17) respective de telle manière à permettre le mouvement dudit au moins un tiroir (23), jusqu'à une position active, dans laquelle ledit piston de distribution (26) vient en butée contre ladite chambre d'infusion (16, 17) respective de manière à la sceller hermétiquement, et vice versa en raison du retour élastique desdits premiers moyens élastiques (27), lesdits pistons de distribution (26) étant formés de sorte que chacun forme à l'intérieur de lui un canal d'alimentation (29) qui est adapté pour relier ladite au moins une vanne électrique (19) auxdites au moins deux chambres d'infusion (16, 17), lesdits moyens de détection (21) comportant, pour chacun desdits pistons de distribution (26), un poussoir qui est sensiblement en forme de T et est formé par une plaque perforée (30), qui peut être agencée de manière à faire face à la chambre respective parmi lesdites au moins deux chambres d'infusion (16, 17), et une tige (31), qui est reçue de manière coulissante avec un jeu intérieurement et le long du canal respectif parmi lesdits canaux d'alimentation (29), lesdits canaux d'alimentation (29) étant formés à l'intérieur desdits pistons de distribution (26) centralement à eux et d'une manière qui est parallèle à ladite direction sensiblement normale (28) et lesdits poussoirs étant mobiles en opposition à des seconds moyens élastiques (32) le long de ladite direction sensiblement normale (28) depuis une position de détection, dans laquelle chacun desdits poussoirs fait saillie à partir du piston respectif parmi lesdits pistons de distribution (26) dans la direction de la chambre respective parmi lesdites au moins deux chambres d'infusion (16, 17) de sorte que la plaque respective parmi lesdites plaques perforées (30) est reçue dans ladite chambre d'infusion (16, 17) respective, jusqu'à une position détectée, dans laquelle chacun desdits poussoirs est rétracté dans le piston respectif parmi lesdits pistons de distribution (26) en conséquence de l'opposition à ladite capsule et/ou dosette (13) reçue dans ladite chambre d'infusion (16, 17) respective lors de la transition desdits pistons de distribution (26) de ladite position inactive à ladite position active, et vice versa en raison du retour élastique desdits seconds moyens élastiques (32) lors de la transition desdits pistons de distribution (26) de ladite position active à ladite position inactive, lesdits seconds moyens élastiques (32) étant intercalés entre lesdites plaques perforées (30) et lesdites premières surface en opposition (33) qui sont formées par lesdits pistons de distribution (26) sur le côté opposé par rapport auxdites au moins deux chambres d'infusion (16, 17) relativement auxdites plaques perforées (30), lesdites tiges (31) comportant en outre chacune une partie radialement élargie (34) qui est agencée sur le côté opposé par rapport auxdites plaques perforées (30) et est adaptée pour agir comme un limiteur de course du type mécanique contre des secondes surfaces en opposition (35) formées par lesdits pistons de distribution (26) sur le côté opposé par rapport auxdites premières surfaces en opposition (33) lors de la transition de ladite position détectée à ladite position de détection.

2. Machine de distribution (1) selon la revendication 1, **caractérisée en ce que** lesdits moyens de commande d'écoulement (20) sont constitués d'éléments d'étanchéité hydrauliques qui sont associés à au moins un desdits pistons de distribution (26) et sont agencés à l'intérieur du canal respectif parmi lesdits canaux d'alimentation (29) de manière à affecter l'écoulement d'eau qui arrive de ladite au moins une vanne électrique (19) vers la chambre respective parmi lesdites au moins deux chambres d'infusion (16, 17) lorsque lesdits pistons de distribution (26) sont agencés dans ladite position active en l'absence de ladite capsule et/ou dosette.

3. Machine de distribution (1) selon la revendication 2, **caractérisée en ce que** lesdits moyens de commande d'écoulement (20) sont agencés sur uniquement une desdites au moins deux chambres d'infusion (16), afin de permettre à l'eau de s'écouler dans l'autre desdites au moins deux chambres d'infusion (17) même en l'absence desdites capsules ou dosettes (13).

4. Machine de distribution (1) selon la revendication 2 ou 3, **caractérisée en ce que** lesdits moyens de commande d'écoulement (20) comportent un joint annulaire (36) qui est monté sur au moins une desdites tiges (31) sur ladite partie radialement élargie (34) de manière à être intercalé entre ladite partie radialement élargie (34) et la surface respective parmi lesdites secondes surfaces en opposition (35).

5. Machine de distribution (1) selon une ou plusieurs des revendications précédentes, **caractérisée en ce que** ledit au moins un ensemble d'infusion (12) comporte au moins un échangeur de chaleur (37) qui est directement associé à ladite au moins une vanne électrique (19), qui forme à l'intérieur d'elle les canaux pour le passage de l'eau destinée auxdites au moins deux chambres d'infusion (16, 17), qui supporte lesdits pistons de distribution (26) et est associé de manière coulissante audit corps principal (22) au moyen de deux montants guidés (38) qui sont orientés parallèlement à ladite direction sensiblement normale (28) de sorte que lesdits pistons de distribution (26) sont agencés au-dessus dudit corps principal (22), lesdits premiers moyens élastiques (27) étant agencés le long desdits montants guidés (38), d'une manière qui est intercalée entre ledit au moins un échangeur de chaleur (37) et ledit corps principal (22).

6. Machine de distribution (1) selon la revendication 5, **caractérisée en ce que** le mouvement dudit au moins un échangeur de chaleur (37) est assuré au moyen d'un système de manivelle (38) qui est intercalé entre ledit échangeur de chaleur (37) et une pièce fixe (39) dudit châssis de support (2).

7. Machine de distribution (1) selon la revendication 6, **caractérisée en ce que** le mouvement dudit système de manivelle (38) est assuré au moyen d'un levier d'actionnement manœuvré manuellement (40).
